# EUROPÄISCHE PATENTANMELDUNG

(11) **EP 1 864 890 A2**
(43) Veröffentlichungstag der Anmeldung: **12.12.2007**
(21) Anmeldenummer: 07010913.7
(22) Anmeldetag: 01.06.2007
(51) Int. Cl.: B62D 21/17, B60Q 1/00

(54) **Seitenschwellerteil**

(30) Priorität: 09.06.2006 DE 102006026944
(71) Anmelder: Kunststoff-Technik Scherer & Trier GmbH & Co. KG, 96247 Michelau (DE)
(72) Erfinder: Reißenweber, Dirk, 96237 Ebersdorf (DE)
(74) Vertreter: Prechtel, Jörg

(57) **Zusammenfassung**

Die vorliegende Erfindung stellt ein Seitenschwellerteil (18) für die Montage in einem Seitenschwellerbereich (16) eines Fahrzeugs (10) bereit, umfassend mindestens einen Befestigungsabschnitt zur Befestigung des Seitenschwellerteils (18) an einer vorbestimmten Position in dem Seitenschwellerbereich (18) des Fahrzeugs (10), wobei das Seitenschwellerteil (18) mindestens eine Beleuchtungseinheit (40) aufweist, welche zur Aufnahme mindestens eines Leuchtmittels eingerichtet ist, um Licht in eine Lichtabstrahlrichtung abzustrahlen, wobei die Lichtabstrahlrichtung der mindestens einen Beleuchtungseinheit (40) in einem an einem Fahrzeug (10) befestigten Zustand des Seitenschwellerteils (18) zur Fahrbahnebene des Fahrzeugs (10) hin oder schräg zur Fahrbahnebene des Fahrzeugs (10) hin gerichtet ist.

## Beschreibung

Die vorliegende Erfindung betrifft ein Seitenschwellerteil für die Montage in einem Seitenschwellerbereich eines Fahrzeugs, umfassend mindestens einen Befestigungsabschnitt zur Befestigung des Seitenschwellerteils an einer vorbestimmten Position in dem Seitenschwellerbereich des Fahrzeugs, sowie ein Fahrzeug, an welchem ein solches Seitenschwellerteil montiert ist.

Ein Seitenschwellerteil dieser Art ist beispielsweise ein herkömmlicher Seitenschweller, welcher in einem Seitenschwellerbereich eines Fahrzeugs zur Verkleidung des Seitenholms der Fahrzeugkarosserie angebracht ist. An einer dem Fahrzeug zugewandten Seite weist ein solcher Seitenschweller Befestigungsabschnitte, beispielsweise Clipverbindungselement auf, während die vom Fahrzeug abgewandte Seite eine Außenkontur des Fahrzeugs im Seitenschwellerbereich bildet. Bei einem bekannten Fahrzeug bildet ein solcher Seitenschweller gemeinsam mit anderen Verkleidungselementen, wie etwa der Seitentürverkleidung, dem Frontspoiler sowie dem Heckspoiler, eine äußere Karosserieverkleidung, wobei die Formgebung der einzelnen Verkleidungselemente zur Schaffung einer gewünschten Außenkontur des Fahrzeugs aufeinander abgestimmt ist.

Bei einem herkömmlichen Fahrzeug der genannten Art kann ein Verbesserungsbedarf im Hinblick auf die Sicherheit und den Komfort der Bedienung des Fahrzeugs während eines Ein- und Aussteigens bei Dunkelheit festgestellt werden. Zwar ist bei Fahrzeugen im Allgemeinen eine Innenraumbeleuchtung vorgesehen, welche die Orientierung für den Fahrer bzw. Passagier während des Ein- und Aussteigens im Inneren des Fahrzeugs unterstützt, jedoch sind die Lichtverhältnisse außerhalb des Fahrzeugs oftmals unzureichend und führen zu einer deutlichen Erschwernis der mit dem Ein- und Aussteigen zusammenhängenden Aktivitäten gegenüber den Verhältnissen bei Tageslicht. Insbesondere wird hier an einen sogenannten Seitentür-Vorfeldbereich der Fahrbahn gedacht, in welchem die Füße einer einsteigenden Person stehen, wenn diese die Seitentür des Fahrzeugs öffnet oder entriegelt. Aber auch während des Aussteigens werden die Füße des Fahrer bzw. Passagiers in diesem Seitentür-Vorfeldbereich aufgesetzt. Insbesondere bei schlechten Lichtverhältnissen kann es dazu kommen, dass der Fahrer bzw. Passagier, dessen Aufmerksamkeit auf das Ein- bzw. Aussteigen gerichtet ist, auf unsicheren oder inhomogenen Untergrund tritt. Der Fahrer bzw. Passagier muss demnach bei schlechten Außenlichtverhältnissen eine deutliche Reduzierung des Komforts und der Sicherheit beim Ein- bzw. Aussteigen in Kauf nehmen.

Einen Ansatz zur Lösung dieser Aufgabenstellung bieten bekannte Beleuchtungskörper, welche an einem Seitenspiegel des Fahrzeugs oder an einer Seitentürunterseite montierbar sind, um Licht zur Fahrbahnebene hin auszusenden. Diese Vorrichtungen weisen jedoch verschiedene Nachteile auf. So bietet der an dem Seitenspiegel anzubringende Beleuchtungskörper lediglich eine punktuelle Ausleuchtung in einem kleinen Bereich neben der Seitentür. Andererseits tritt bei der an der Seitentür montierten Beleuchtungsvorrichtung der Nachteil auf, dass ein Seitentür-Vorfeldbereich nur bei zumindest teilweise geöffneter Seitentür beleuchtbar ist und die Ausleuchtung des Seiten-Vorfeldbereich entscheidend vom Öffnungswinkel der Tür abhängt. Eine Erleichterung des Einsteigevorgangs in das Fahrzeug kann somit bei dieser bekannten Vorrichtung kaum erreicht werden.

Ausgehend von diesen Umständen ist es Aufgabe der vorliegenden Erfindung, ein Seitenschwellerteil der eingangs genannten Art bzw. ein Fahrzeug bereitzustellen, mit welchen es möglich ist, die Sicherheit und den Komfort für einen Fahrer bzw. einen Passagier beim Einsteigen in das Fahrzeug bzw. beim Aussteigen aus dem Fahrzeug zu erhöhen.

Nach einem ersten Aspekt der vorliegenden Erfindung wird diese Aufgabe gelöst durch ein Seitenschwellerteil der eingangs genannten Art, welches mindestens eine Beleuchtungseinheit aufweist, die zur Aufnahme mindestens eines Leuchtmittels eingerichtet ist, um Licht in eine Lichtabstrahlrichtung abzustrahlen, wobei die Lichtabstrahlrichtung der mindestens einen Beleuchtungseinheit in einem an einem Fahrzeug befestigten Zustand des Seitenschwellerteils zur Fahrbahnebene des Fahrzeugs hin oder schräg zur Fahrbahnebene des Fahrzeugs hin gerichtet ist.

Ein in dem Seitenschwellerbereich eines Fahrzeug montierbares Seitenschwellerteil weist somit gemäß der Erfindung mindestens eine Beleuchtungseinheit auf, mit welcher Licht zur Fahrbahnebene des Fahrzeugs hin oder schräg zur Fahrbahnebene hin abstrahlbar ist. Auf diese Weise ist es möglich, einen Teil der Fahrbahn im Bereich der Seitentüren des Fahrzeugs zu beleuchten. Durch eine damit verbundene Aufhellung dieses Bereichs der Fahrbahn kann die Trittsicherheit für einen Fahrer bzw. Passagier beim Ein- oder Aussteigen deutlich erhört werden. Zudem kann ein auf diese Weise beleuchteter Fahrbahnbereich auch die Aufmerksamkeit des Fahrers bzw. Passagiers direkt auf diesen zu betretenden Bereich lenken, um zu vermeiden, dass ein dort befindliches Hindernis oder eine besondere Bodenbeschaffenheit, etwa eine Pfütze oder dergleichen, übersehen wird.

Ein Seitenschwellerteil gemäß der Erfindung weist ferner den Vorteil auf, dass mit diesem der Fahrbahnbereich auch dann beleuchtet werden kann, wenn die Türen des Fahrzeugs geschlossen sind. In Verbindung mit der Auslegung des Seitenschwellerteils zur Montage in einem Seitenschwellerbereich des Fahrzeugs ergibt sich für die Art der Beleuchtung des Fahrbahnbereichs ein hohes Maß an Gestaltungsspielraum, um wahlweise eine punktuelle oder eine gleichmäßig-flächige Ausleuchtung des Fahrbahnbereichs vorzusehen.

Zusätzlich zu den beschriebenen Vorteilen tritt bei einem mit dem erfindungsgemäßen Seitenschwellerteil ausgestatteten Fahrzeug auch ein besonderer ästhetischer Effekt auf, der sich für einen Betrachter aus dem Gesamtbild aus dem Fahrzeug und dem beleuchteten Fahrbahnbereich ergibt. Das erfindungsgemäße Seitenschwellerteil kann somit zu einem wertsteigerndem Beleuchtungseffekt oder einem vorteilhaften Wiedererkennungseffekt genutzt werden. Der durch die erfindungsgemäße Fahrbahnbeleuchtung hervorgerufene ästhetische Effekt kann noch weiter gesteigert werden, indem das Ein- und/oder Ausschalten der mindestens einen Beleuchtungseinheit unter Verwendung eines Dimmers durchgeführt wird, so dass die Beleuchtung durch die mindestens eine Beleuchtungseinheit kontinuierlich an- bzw. abdimmbar ist.

Bei Verwendung einer Beleuchtungseinheit, welche eine Mehrzahl von Lichtabstrahlrichtungen aufweist, reicht es zur Erzielung der genannten erfindungsgemäßen Vorteile aus, wenn mindestens eine der Lichtabstrahlrichtungen gemäß der Erfindung zur Fahrbahnebene des Fahrzeugs hin oder schräg zur Fahrbahnebene des Fahrzeugs hin gerichtet ist. Zur Verbesserung der Ausleuchtung des entsprechenden Fahrbahnbereichs kann es jedoch vorteilhaft sein, wenn eine Hauptlichtabstrahlrichtung, z.B. bei einem kegelförmigen oder zylinderförmigen Strahl die Mittelachse der Kegelform bzw. der Zylinderform, zur Fahrbahnebene des Fahrzeugs hin oder schräg zur Fahrbahnebene des Fahrzeugs hin gerichtet ist.

In einer vorteilhaften Ausführungsform der Erfindung ist vorgesehen, dass die mindestens eine Beleuchtungseinheit so angeordnet und eingerichtet ist, dass in einem an einem Fahrzeug befestigten Zustand des Seitenschwellerteils ein länglicher Seitentür-Vorfeldbereich der Fahrbahnebene, nämlich ein Bereich der Fahrbahnebene, welcher sich außerhalb einer Projektionsfläche des Fahrzeug in die Fahrbahnebene befindet, durch die Beleuchtungseinheit beleuchtbar ist. Mit einem Seitenschwellerteil gemäß dieser Ausführungsform lässt sich die Fahrbahn in einem länglichen Seitentür-Vorfeldbereich beleuchten, in welchem die Füße des Fahrers bzw. Passagiers während des Ein- bzw. Aussteigens mit hoher Wahrscheinlichkeit aufgesetzt werden.

Ein Seitenschwellerteil gemäß der beschriebenen Ausführungsform der Erfindung kann so eingerichtet sein, dass der beleuchtbare Seitentür-Vorfeldbereich im Bereich von Seitentüren des Fahrzeugs an die Projektionsfläche des Fahrzeugs in die Fahrbahnebene im Wesentlichen angrenzt. Es ergibt sich somit als beleuchtbarer Bereich der Fahrbahnebene ein streifenartiger länglicher Bereich vor den Seitentüren des Fahrzeugs, welcher bis an den Rand der Projektionsfläche des Fahrzeugs in die Fahrbahnebene heran reicht. Ein Bereich der Fahrbahn unterhalb des Fahrzeugbodens wird jedoch in dieser Variante der Ausführungsform der Erfindung nicht beleuchtet, weshalb die mindestens eine Beleuchtungseinheit energiesparend betrieben werden kann bzw. bei gegebener Lichtleistung der Beleuchtungseinheit eine möglichst effektive Ausleuchtung des interessierenden Fahrbahnbereichs stattfinden kann.

Eine besonders gute Erkennbarkeit des Seitentür-Vorfeldbereichs kann erzielt werden, wenn die mindestens eine Beleuchtungseinheit für einen in Bezug auf die Fahrzeuglängsrichtung im Wesentlichen gleichmäßige Ausleuchtung des Seitentür-Vorfeldbereichs eingerichtet ist. Eine gleichmäßige Ausleuchtung des Seitentür-Vorfeldbereichs kann außerdem den erzielbaren ästhetischen Effekt weiter verbessern.

Vorteilhaft kann die Beleuchtungseinheit des erfindungsgemäßen Seitenschwellerteils zur Aufnahme mindestens einer LED oder LED-Anordnung eingereicht sein oder durch mindestens eine LED oder LED-Anordnung gebildet sein. LEDs zeichnen sich durch einen relativ hohen Wirkungsgrad aus und weisen eine außerordentlich hohe Lebensdauer auf. Zudem sind sie klein und leicht und durch Farbmischung mehrerer LEDs lassen sich beliebige Farbtöne erzeugen oder ansteuern.

Um die mindestens eine Beleuchtungseinheit des Seitenschwellerteils über die Stromversorgung des Fahrzeugs speisen zu können, kann vorgesehen sein, Anschlussmittel zum Anschluss der mindestens einen Beleuchtungseinheit an ein Fahrzeugbordnetz bereitzustellen. Das Seitenschwellerteil benötigt dann keine eigene Energiequelle.

Die mindestens eine Beleuchtungseinheit kann ferner eine Reflektoranordnung aufweisen, um aus dem Leuchtmittel austretendes Licht in die Lichtabstrahlrichtung zu reflektieren. Eine solche Reflektoranordnung kann vorzugsweise dann eingesetzt werden, wenn ein im Wesentlichen allseitig lichtabstrahlendes Leuchtmittel verwendet wird, wie etwa eine Glühlampe oder eine Leuchtstoffröhre oder dergleichen. Mittels der Reflektoranordnung kann dann das aus dem Leuchtmittel in eine von der Lichtabstrahlrichtung verschiedenen Richtung austretende Licht in Lichtabstrahlrichtung umgelenkt werden, um zur Beleuchtung des beleuchteten Fahrbahnbereichs beizutragen.

In einer weiteren Ausführungsform der Erfindung umfasst das Seitenschwellerteil ferner eine Vermutzungsschutzanordnung, welche mindestens einen neben der Beleuchtungseinheit angeordneten und im Wesentlichen parallel zur Lichtabstrahlrichtung ausgerichteten Wandabschnitt aufweist. In einer solchen Ausführungsform kann die Beleuchtungseinheit oder zumindest eine Beleuchtungseinheit einer Mehrzahl von Beleuchtungseinheiten des Seitenschwellerteils in gewissem Maße vor einer Verschmutzung geschützt werden, welche aufgrund der Positionierung des Seitenschwellerteils in einem Seitenschwellerbereich des Fahrzeugs, insbesondere während der Fahrt durch von den Vorderrädern aufgeschleuderten Schmutz oder Schnee oder dergleichen droht. Dadurch kann einer Behinderung der Lichtabstrahlung oder einer Behinderung der gleichmäßigen Lichtabstrahlung aufgrund einer Verschmutzung der mindestens einen Beleuchtungseinheit weitestgehend vorgebeugt werden.

Um mit dem erfindungsgemäßen Seitenschwellerteil einen länglichen Seitentür-Vorfeldbereich des Fahrzeugs insbesondere gleichmäßig über die gesamte Länge des Seitenschwellerbereichs beleuchten zu können, ist in einer weiteren bevorzugten Ausführungsform vorgesehen, dass das Seitenschwellerteil eine Mehrzahl von Beleuchtungseinheiten aufweist, welche über die im Wesentlichen gesamte Länge des Seitenschwellerteils verteilt angeordnet sind, oder dass das Seitenschwellerteil eine Anzahl von länglichen Beleuchtungseinheiten aufweist, welche sich entlang des Seitenschwellerteils im Wesentlichen über dessen gesamte Länge erstrecken. In dieser bevorzugten Ausführungsform ist es besonders zuverlässig möglich, den gesamten Seitentür-Vorfeldbereich in Längsrichtung im Wesentlichen gleichmäßig auszuleuchten.

Wenn das Seitenschwellerteil eine Mehrzahl von Beleuchtungseinheiten umfasst, so wird es vorteilhaft sein, wenn diese Beleuchtungseinheiten ein gemeinsames Anschlussmittel zum Anschluss an ein Fahrzeugbordnetz aufweisen, so dass beim Anschluss des Seitenschwellerteils an das Fahrzeugbordnetz nur ein Anschlussmittel zu kontaktieren ist und die Anzahl an benötigten Leitern, Kontaktelementen und dergleichen reduziert werden kann.

In einer besonders bevorzugten Ausführungsform ist das erfindungsgemäße Seitenschwellerteil als Fahrzeugseitenschweller ausgebildet. Auf diese Weise ist das Seitenschwellerteil mit samt der an ihm vorgesehenen mindestens einen Beleuchtungseinheit als Fahrzeugseitenschweller an einem Fahrzeug montierbar oder montiert, so dass ihm die Doppelfunktion als Verkleidungsteil des Karosserieseitenholms und als erfindungsgemäßes Seitenschwellerteil zur Ausleuchtung eines Seitentür-Vorfeldbereichs zukommt.

Wenn das Seitenschwellerteil als Fahrzeugseitenschweller ausgebildet ist, so kann die Beleuchtungseinheit vorteilhaft an einem Flächenabschnitt des Seitenschwellerteils vorgesehen sein, welcher in einem an einem Fahrzeug befestigten Zustand des Seitenschwellerteils im Wesentlichen zur Fahrbahnebene hin weist. Um Licht zur Fahrbahnebene des Fahrzeugs hin oder schräg zur Fahrbahnebene des Fahrzeugs hin auszusenden kann die Beleuchtungseinheit dann so eingereicht sein, dass ihre Lichtabstrahlrichtung im Wesentlichen entlang einer Flächennormalen des Flächenabschnitts ausgerichtet ist, was eine konstruktiv einfache und gleichzeitig unauffällige Integration der Beleuchtungseinheit in dem Fahrzeugseitenschweller ermöglicht.

Der erfindungsgemäße Fahrzeugseitenschweller kann im Wesentlichen eine L-Profilform oder eine U-Profilform aufweisen, wobei die mindestens eine Beleuchtungseinheit einem Beugungsbereich der L-Form bzw. U-Form benachbart angeordnet ist. Diese Ausführungsform ist insbesondere dann vorteilhaft, wenn die Beleuchtungseinheit gleichzeitig, wie oben beschrieben, an einem Flächenabschnitt des Fahrzeugseitenschwellers vorgesehen ist, welcher im Wesentlichen zur Fahrbahnebene hin weist. In diesem Fall ist dann die mindestens eine Beleuchtungseinheit relativ weit außen an dem Fahrzeugseitenschweller, d.h. an einer vom Fahrzeugboden entfernteren Position, angeordnet, was insbesondere in Bezug auf die Reinigung der Beleuchtungseinheit des Fahrzeugseitenschwellers vorteilhaft ist. Eine derart positionierte Beleuchtungseinheit ist nämlich von außen, z.B. durch die Borsten einer Bürstenanordnung einer Waschanlage relativ gut zugänglich, so dass die mindestens eine Beleuchtungseinheit während des Waschens des Fahrzeugs in einer Waschanlage mit gereinigt werden kann.

In einer besonders unauffälligen Ausgestaltung des als Fahrzeugseitenschweller ausgebildeten Seitenschwellerteils ist vorgesehen, dass die mindestens eine Beleuchtungseinheit an einer Innenseite des Seitenschwellerteils, welche in einem an einem Fahrzeug befestigten Zustand dem Fahrzeug zugewandt ist, angeordnet ist und dass das Seitenschwellerteil mindestens eine Durchgangsöffnung in Zuordnung zu der Beleuchtungseinheit aufweist, welche den Durchtritt von Licht von der Beleuchtungseinheit erlaubt. Auf diese Weise kann erreicht werden, dass das äußere Erscheinungsbild des Fahrzeugseitenschwellers durch die mindestens eine Beleuchtungseinheit sowie die damit in Verbindung stehenden Elemente, beispielsweise Anschlusselemente und dergleichen, nur in minimalem Umfang beeinträchtigt wird. Außerdem können die mindestens eine Beleuchtungseinheit sowie ggf. die weiteren Bauteile auf diese Weise in einer vor äußeren Einflüssen geschützten Position untergebracht werden.

Sind eine Mehrzahl von Beleuchtungseinheiten in dem Seitenschwellerteil vorgesehen, so kann es vorteilhaft sein, wenn die Mehrzahl von Beleuchtungseinheiten über eine Verbindungsleiste miteinander verbunden sind, welche, vorzugsweise mittels einer Clipverbindung, an dem Seitenschweller befestigbar ist. Dies vereinfacht die Montage der Mehrzahl von Beleuchtungseinheiten an dem Seitenschweller und kann außerdem zur Führung von elektrischen Anschlussleitungen der einzelnen Beleuchtungseinheiten dienen. Wenn eine Clipverbindung vorgesehen ist, so kann daran gedacht werden, eine Unterbaugruppe umfassend die Verbindungsleiste, die Mehrzahl von Beleuchtungseinheiten und ggf. vorhandene Anschlusselemente, Anschlussleitungen und dergleichen bereitzustellen, welche als solche in einem einfachen Arbeitsgang an dem Seitenschweller anclipbar ist. Auf diese Weise kann ein Seitenschweller auch problemlos mit einer solchen Unterbaugruppe nachgerüstet werden.

Die Verbindungsleiste und ggf. die Clipverbindungsmittel sowie Teile von Anschlussmitteln können kostengünstig und von geringem Gewicht hergestellt werden, wenn sie aus einem Kunststoffextrudat oder einem Kunststoffgussteil gebildet sind.

Nach einem zweiten Aspekt der vorliegenden Erfindung wird die oben genannte Aufgabe durch ein Fahrzeug gelöst, welches mindestens ein erfindungsgemäßes Seitenschwellerteil der oben beschriebenen Art umfasst. Insbesondere weist ein solches Fahrzeug die oben in Bezug auf den ersten Aspekt geschilderten Vorteile auf.

Nach einer bevorzugten Ausführungsform kann vorgesehen sein, dass das Fahrzeug je ein- Seitenschwellerteil gemäß der vorliegenden Erfindung in jedem von zwei Seitenschwellerbereichen umfasst. Es ist somit möglich, sowohl den Seitentür-Vorfeldbereich der Fahrertür als auch den Seitentür-Vorfeldbereich der Beifahrertür oder/und ggf. die Seitentür-Vorfeldbereiche der linken bzw. rechten Fondtüren zu beleuchten. Im Hinblick auf den mit einem erfindungsgemäßen Fahrzeug erzielbaren ästhetischen Effekt aber auch im Hinblick auf die Erzielung von maximalem Komfort und Sicherheit ist es bevorzugt, beiden Seitenschwellerbereiche auf ihrer gesamten Länge mit einem erfindungsgemäßen Seitenschwellerteil beleuchtbar zu gestalten.

Für eine zweckmäßige und einfache Steuerung des Betriebs der Beleuchtungseinheiten des mindestens einen Seitenschwellerteils kann vorgesehen sein, dass die mindestens eine Beleuchtungseinheit über eine Fahrzeugelektronik ansteuerbar ist. Insbesondere wird im Hinblick auf die zeitliche Ansteuerung auch daran gedacht, dass die Ansteuerung der mindestens einen Beleuchtungseinheit mit der Ansteuerung einer Innenraumbeleuchtung des Fahrzeugs gekoppelt, vorzugsweise mit dieser synchronisiert ist. Auf diese Weise können die zur Ansteuerung der Innenraumbeleuchtung ggf. bereits vorhandenen Steuerschaltungen, welche eine Ansteuerung der Innenraumbeleuchtung während des Ein- bzw. Aussteigens übernehmen, auch für die Erfassung und Festlegung der Ein- bzw. Ausschaltzeitpunkte der mindestens einen Beleuchtungseinheit genutzt werden.

In einer weiteren Ausführungsform der Erfindung kann vorgesehen sein, dass das Fahrzeug eine Rangiermodus-Erfassungseinrichtung aufweist, welche einen Rangiermodus des Fahrzeug erfasst, und dass ein Teil oder alle der mindestens einen Beleuchtungseinheit auf ein Signal der Rangiermodus-Erfassungseinrichtung hin ansteuerbar ist/sind. Diese Ausführungsform der Erfindung ermöglicht es, die Beleuchtung eines fahrbaren Bereiches neben dem Seitenschwellerbereich des Fahrzeugs auch beim Rangieren zu verwenden, um Orientierungselemente oder Hindernisse der Fahrbahn etwa eine Bordsteinkante, eine Fahrbahnlinie oder ein Schlagloch oder dergleichen, für den Fahrer während des Rangierens des Fahrzeugs besser sichtbar zu machen.

Die vorliegende Erfindung wird nachfolgend anhand von bevorzugten Ausführungsformen unter Bezugnahme auf die beigefügten Zeichnungen näher erläutert.
- Figur 1 zeigt: eine Prinzipdarstellung eines erfindungsgemäßen Fahrzeugs in perspektivischer Ansicht;

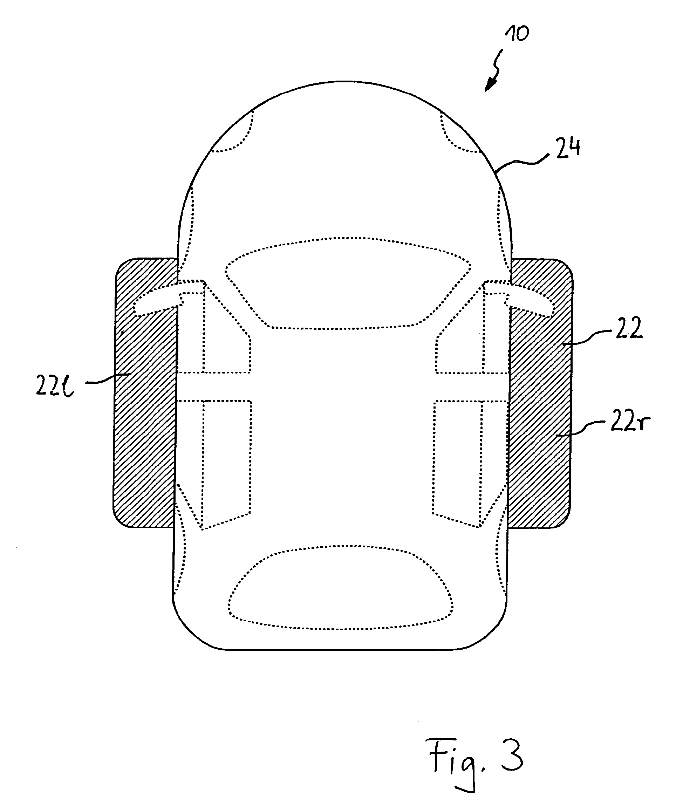

- Figur 2 zeigt: eine Perspektivdarstellung eines erfindungsgemäßen Seitenschwellers in perspektivischer Ansicht;
- Figur 3 zeigt: eine Prinzipdarstellung eines erfindungsgemäßen Fahrzeugs sowie eines Teils der Fahrbahn in einer Ansicht von oben;
- Figur 4 zeigt: eine detaillierte perspektivische Ansicht eines erfindungsgemäßen Seitenschwellers;
- Figur 5 zeigt: eine vergrößerte Ansicht eines Ausschnitts des in Figur 4 dargestellten Seitenschwellers;
- Figur 6 zeigt: eine Querschnittsansicht eines Seitenschwellers gemäß einer ersten Ausführungsvariante der Erfindung; und
- Figur 7 zeigt: eine Querschnittsansicht eines Seitenschwellers gemäß einer zweiten Ausführungsvariante der Erfindung.

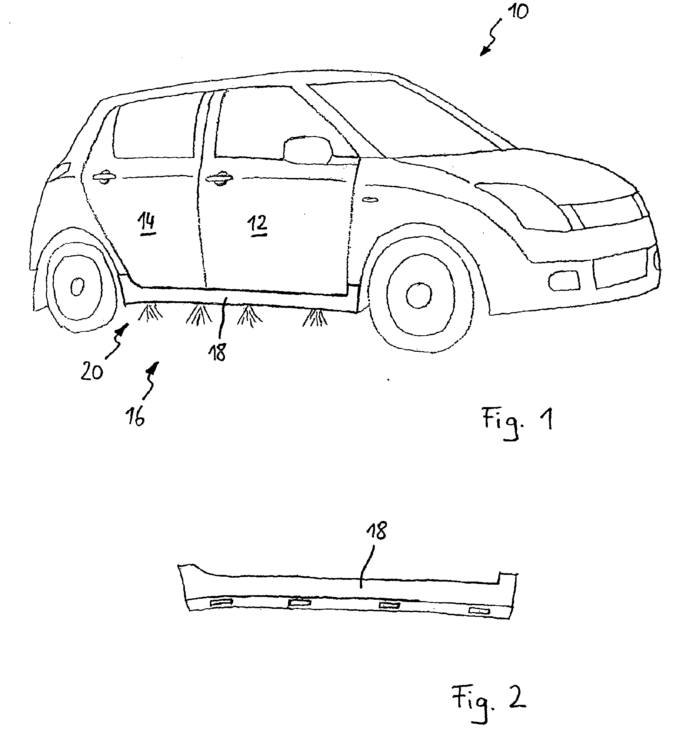

Ein in Figur 1 allgemein mit 10 bezeichnetes Fahrzeug weist eine Beifahrertür 12 sowie eine rechte Fondtür 14 auf, welche an der Karosserie des Fahrzeugs angebracht sind. In einem sich unterhalb der Türen 12, 14 in Längsrichtung des Fahrzeugs erstreckenden Seitenschwellerbereich 16 ist ein Seitenschweller 18 befestigt, welcher einen in Figur 1 nicht erkennbaren Seitenholm der Fahrzeugkarosserie verkleidet. In entsprechender Weise sind auf der in Figur 1 nicht sichtbaren gegenüberliegenden Seite des Fahrzeugs 10 eine Fahrertür und eine linke Fondtür für den Ein- bzw. Ausstieg eines Fahrer bzw. Passagiers sowie ein linker Seitenschweller in einem entsprechenden Seitenschwellerbereich unterhalb der linken Türen vorgesehen. Die nachfolgenden Erläuterungen beziehen sich auf Bauteile des rechten Seitenschwellerbereichs, sind jedoch auf den linken Seitenschwellerbereich in entsprechender Weise übertragbar.

Wie in Figur 1 bei 20 angedeutet ist, ist das Fahrzeug 10 gemäß der Erfindung dafür ausgelegt, Licht von dem Seitenschweller 18 aus zur Fahrbahnebene des Fahrzeugs hin oder schräg zur Fahrbahnebene des Fahrzeugs hin auszusenden. In der in den Figuren dargestellten Ausführungsform beleuchtet das Fahrzeug 10 auf diese Weise gleichmäßig einen länglichen Seitentür-Vorfeldbereich 22, welcher in Figur 3 in einer schematischen Draufsicht auf das Fahrzeug 10 illustriert ist. Dabei stellt in Figur 3 die Linie 24 die Projektionsfläche des Fahrzeugs 10 in die mit der Zeichenebene zusammenfallende Fahrbahnebene dar.

Gemäß Figur 3 umfasst der Seitentür-Vorfeldbereich 22 einen linken Seitentür-Vorfeldbereich 221, welcher an einer linken Fahrzeugseite an die Projektionsfläche 24 des Fahrzeugs 10 angrenzt, sowie einen rechten Seitentür-Vorfeldbereich 22r, welcher an einer rechten Fahrzeugseite an die Projektionsfläche 24 des Fahrzeugs 10 angrenzt. Die Bereiche 22l und 22r des Seitentür-Vorfeldbereichs 22 sind in etwa streifenförmig und verlaufen in Längsrichtung des Fahrzeugs im Wesentlichen über die Gesamtlänge des Ein- bzw. Ausstiegbereichs; d.h. entlang der linken und rechten Seitentüren.

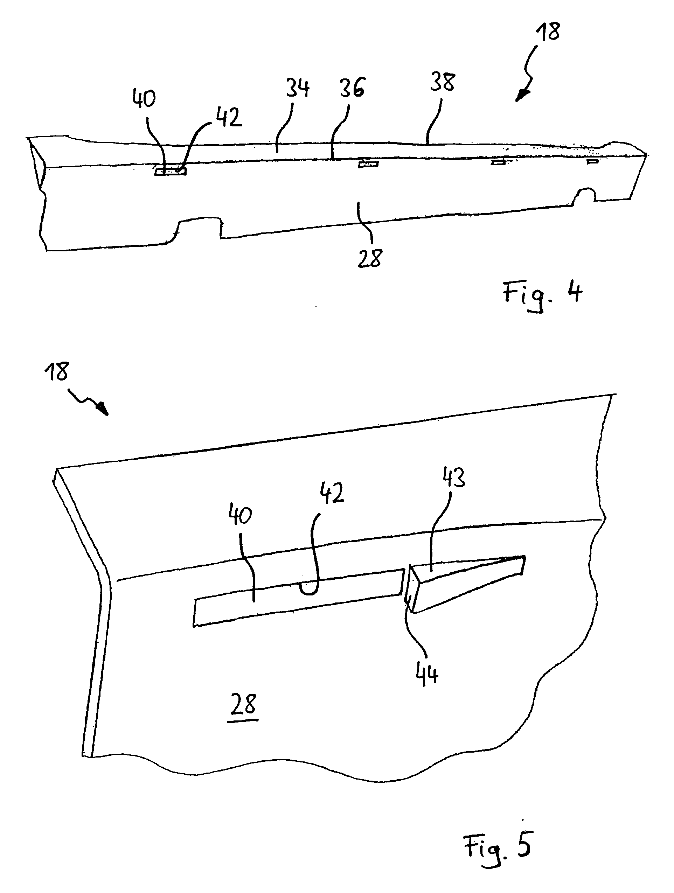

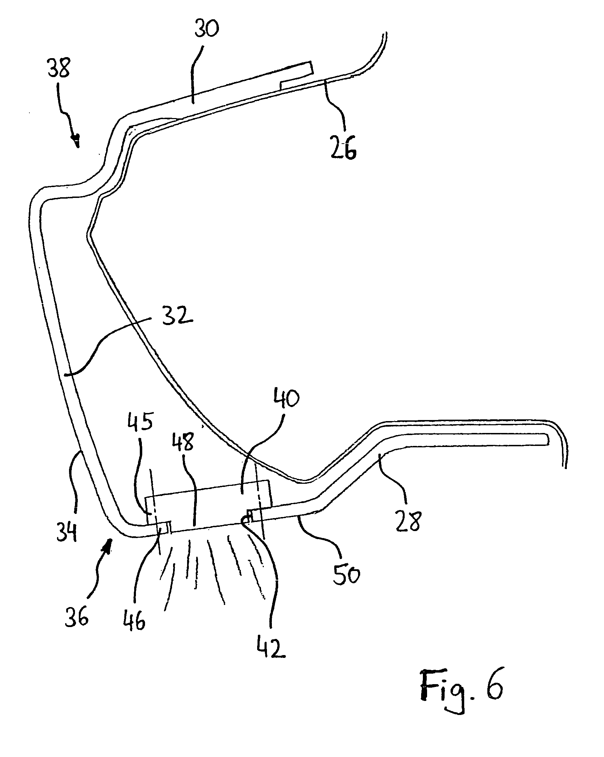

In den Figuren 4 bis 7 ist der Seitenschweller 18 des Fahrzeugs 10 gemäß der Ausführungsform der Erfindung detaillierter dargestellt. Der Seitenschweller 18 ist aus einem Kunststoffgussteil gebildet und hat im Wesentlichen die Gestalt eines länglichen Profils mit U-förmigen Querschnitt, wobei im am Fahrzeug 10 befestigten Zustand des Seitenschwellers 18 ein Seitenholm 26 der Fahrzeugkarosserie in der Öffnung der U-Form aufgenommen ist (Figur 6).

Wie am besten in Figuren 4 und 6 zu erkennen ist, setzt sich die U-Form des Seitenschwellers 18 aus einem der Fahrbahn zugewandten Bodenabschnitt 28 und einem den Fahrzeugtüren 12, 14 zugewandten Türschwellenabschnitt 30, welche die Schenkel der U-Form bilden, sowie einem den Bodenabschnitt 28 mit dem Türschwellenabschnitt 30 verbindenden Seitenabschnitt 32 zusammen. Der Bodenabschnitt 28 ist plattenförmig und ungefähr in der Ebene des Fahrzeugbodens ausgerichtet. Der Seitenabschnitt 32 umfasst an einer dem Seitenholm 26 abgewandten Außenseite eine äußere Sichtfläche 34. Der Bodenabschnitt 28 ist mit dem Abschnitt 32 über einen ersten Beugungsbereich 36 verbunden und der Türschwellenabschnitt 30 ist mit dem Seitenabschnitt 32 über einen zweiten Beugungsbereich 38 verbunden.

In der in den Figuren dargestellten Ausführungsform umfasst der Seitenschweller 18 vier Beleuchtungseinheiten 40, welche in im Wesentlichen gleichmäßigen Abschnitten entlang der Längsrichtungen des Seitenschwellers 18 an dessen Bodenabschnitt 28 angeordnet sind. Die Position der Beleuchtungseinheiten 40 liegt dabei relativ nahe am ersten Beugungsbereich 36, so dass die Beleuchtungseinheit 40 relativ weit außen am Fahrzeug angeordnet sind und somit z.B. für die Borsten einer Bürste einer Waschanlage relativ gut zu erreichen sind. Außerdem ist die Anordnung der Beleuchtungseinheiten 40 in der Nähe des ersten Beugungsbereichs 36 vorteilhaft für die Beleuchtung des Seitentür-Vorfeldbereichs, welcher sich entsprechend Figur 3 auf einen Fahrbahnbereich außerhalb der Projektionsfläche 24 des Fahrzeugs 10 erstreckt.

In der vergrößerten -Darstellung gemäß Figur 5 eines Ausschnitts des Seitenschwellers 18 im Bereich einer Beleuchtungseinheit 40 ist zu erkennen, dass neben der Beleuchtungseinheit ein Verschmutzungsschutz 43 vorgesehen ist, um durch das Vorderrad des Fahrzeugs 10 aufgewirbelten Schmutz, Schnee oder dergleichen zumindest teilweise abzufangen und ein Zusetzen der Beleuchtungseinheit 40 oder eine Beschädigung durch Steinschlag weitestgehend zu verhindern. Der Verschmutzungsschutz 43 ist zwischen dem Vorderrad und der Beleuchtungseinheit 40 nahe der Beleuchtungseinheit 40 am Seitenschweller angespritzt und weist die Form eines Keils auf mit einer im Wesentlichen senkrecht von dem Bodenabschnitt 28 abstehenden Schutzwand 44. Vorzugsweise ist an jeder der Beleuchtungseinheiten 40 ein solcher Verschmutzungsschutz 43 entsprechend vorgesehen.

Figur 6 illustriert schematisch Aufbau und Montage einer Beleuchtungseinheit 40 gemäß einer ersten Ausführungsvariante der Erfindung. In dieser Ausführungsvariante weist der Bodenabschnitt 28 des Seitenschwellers 18 an der Montageposition jeder Beleuchtungseinheit 40 jeweils eine Durchgangsöffnung 42 auf. Hinter der Durchgangsöffnung, auf der Innenseite des Seitenschwellers 18, ist die Beleuchtungseinheit 40 durch Klebverbindung oder Schraubverbindung oder dergleichen befestigt, wobei sich Randabschnitte 45 der Beleuchtungseinheit 40 am Rand 46 der Durchgangsöffnung 42 abstützen. Mit einem Vorsprung 48 reicht die Beleuchtungseinheit 40 in die Durchgangsöffnung 42 hinein, derart, dass der Vorsprung 48 bündig mit einer Außenfläche 50 des Bodenabschnitts 28 abschließt. Durch diesen bündigen Abschluss zwischen Beleuchtungseinheit 40 und Bodenabschnitt 28 kann vermieden werden, dass sich Verunreinigungen an hervorstehenden Kanten oder Vertiefungen im Bereich der Beleuchtungseinheit 40 ansammeln. Außerdem wird dadurch die relativ unauffällige Integration der Beleuchtungseinheiten 40 in den Seitenschweller 18 ermöglicht.

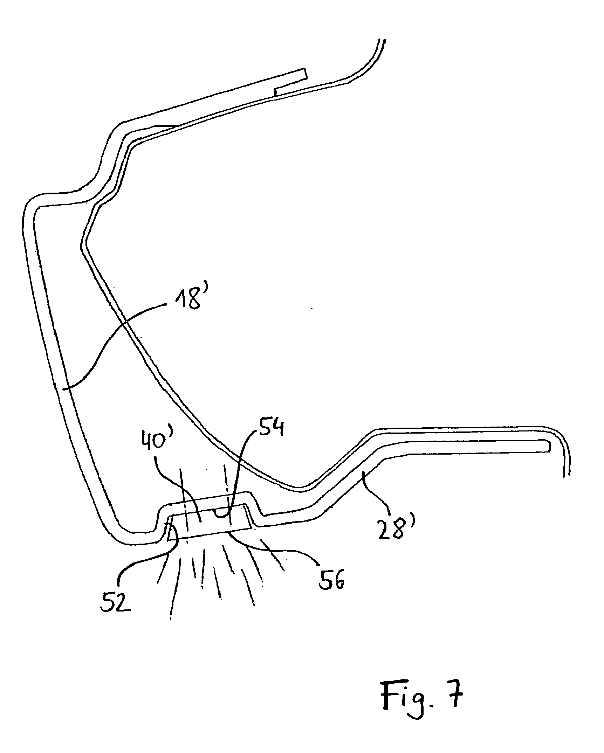

In einer in Figur 7 dargestellten Ausführungsvariante sind die Beleuchtungseinheiten 40' jeweils in Vertiefungen 52 eingesetzt, welche-an den entsprechenden Stellen in dem Bodenabschnitt ausgebildet sind. Diese Vertiefungen 52 können kostengünstig bereits während des Gießens des Seitenschwellers 18' geformt werden, so dass ein zusätzlicher Bearbeitungsschritt des Bohrens oder Fräsens einer Durchgangsöffnung wie im Fall der ersten Ausführungsvariante entfallen kann.

Die Beleuchtungseinheit 40' ist in der zweiten Ausführungsvariante durch Kleben oder Schrauben oder dergleichen an einem Bodenabschnitt 54 der Vertiefung 52 befestigt und weist solche Abmessungen auf, dass ihre nach außen, d.h. zur Fahrbahn hin, gerichtete Außenfläche 56 bündig mit der Außenseite des Bodenabschnitts 28' abschließt. Auf diese Weise lässt sich auch in dieser Ausführungsvariante die Beleuchtungseinheit 40' relativ unauffällig in den Seitenschweller 18' integrieren und Vertiefungen oder vorstehende Kanten, an welchen sich Schmutz oder dergleichen ablagern könnte, können vermieden werden.

Für die in den Figuren nur schematisch dargestellten Beleuchtungseinheiten 40, 40' sind verschiedene Systeme denkbar. Vorzugsweise umfassen die Beleuchtungseinheiten LEDs oder LED-Anordnungen, in denen eine Vielzahl von LEDs über gemeinsame Anschlusspole mit Strom versorgt werden. Alternativ sind andere dem Fachmann bekannte Leuchtsysteme denkbar, insbesondere Glühlampen, deren Licht mittels einer Reflektoranordnung in an sich bekannter Weise in die gewünschte Lichtabstrahlrichtung gerichtet sein kann. Die im Wesentlichen ebene Frontfläche des Vorsprungs 48 bzw. die vordere Fläche 56 kann durch eine lichtdurchlässige Abdeckplatte realisiert werden, welche ein das Leuchtmittel aufnehmendes Gehäuse abdeckt.

Zur Versorgung der Beleuchtungseinheiten mit elektrischer Energie sind in der bevorzugten Ausführungsform elektrische Leiter vorgesehen, welche von den einzelnen Beleuchtungseinheiten aus jeweils für sich oder über ein gemeinsames Anschlussmittel zu einem Fahrzeugbordnetz führen. In Verbindung mit einer Fahrzeugsteuereinheit kann dann elektrische Energie des Fahrzeugbordnetzes den Beleuchtungseinheiten 40, 40' zugeführt werden, wobei Ein- bzw. Ausschaltzeitpunkte der Beleuchtungseinheiten mittels der Steuereinheiten steuerbar sind.

Nachfolgend wird ein Betrieb des erfindungsgemäßen Fahrzeugs 10 gemäß der oben beschriebenen Ausführungsform beschrieben. Dabei umfasst der Betrieb der Ausführungsform einen Ein-/Aussteigemodus sowie einen Rangiermodus.

Für den Ein-/Aussteigemodus kann die Steuerung der Beleuchtungseinheiten 40, 40' an eine Innenraumbeleuchtung des Fahrzeugs 10 gekoppelt sein. In an sich bekannter Weise ist die Innenraumbeleuchtung eines parkenden, verriegelten Fahrzeugs ausgeschaltet. Wenn ein Fahrer bzw. Passagier das Fahrzeug per Fernbedienung oder per Schlüssel-Schloss-Betätigung entriegelt, so schaltet sich die Innenraumbeleuchtung ein, um die Orientierung für den Fahrer beim und nach dem Einsteigen bei Dunkelheit zu erleichtern. Erfindungsgemäß ist die Ansteuerung der Beleuchtungseinheiten an die Ansteuerung der Innenraumbeleuchtung gekoppelt, so dass beim Entriegeln des Fahrzeugs auch die Beleuchtungseinheiten des Seitenschwellers eingeschaltet werden, um den Seitentür-Vorfeldbereich des Fahrzeugs zu beleuchten und ein sicheres und komfortables Herantreten des Fahrers an das Fahrzeug zu ermöglichen.

Nach dem Schließen der Seitentür bleibt die Innenraumbeleuchtung allgemein für eine bestimmte Zeitdauer eingeschaltet und wird nach dem Anlassen des Motors oder nach Ablauf einer vorbestimmten Zeitdauer automatisch abgeschaltet, da angenommen werden kann, dass der Einsteigevorgang dann abgeschlossen ist und die Beleuchtung des Innenraums somit nicht mehr erwünscht ist. Die erfindungsgemäße Ansteuerung der Beleuchtung des Seitentür-Vorfeldbereichs kann in ähnlicher Weise erfolgen wie die der Innenraumbeleuchtung. Alternativ kann jedoch vorgesehen sein, die Beleuchtungseinheiten 40 unmittelbar nach Schließen der Seitentüren abzuschalten, da anzunehmen ist, dass der Fahrer bzw. Passagier die Aufhellung des Seitentür-Vorfeldbereichs dann nicht mehr benötigt. Aus Gründen einer einfacheren Steuerung oder aus ästhetischen Gründen kann die Beleuchtung des Seitentür-Vorfeldbereichs jedoch auch bis zur Aufnahme der Fahrt aktiviert bleiben.

Wenn der Fahrer bzw. der Passagier plant, aus dem Fahrzeug auszusteigen, so ist es wünschenswert, die Seitentür-Vorfeldbeleuchtung einzuschalten. Dazu kann die Ansteuerung der Beleuchtungseinheit beispielsweise wiederum an die Ansteuerung der Innenraumbeleuchtung gekoppelt sein und die Beleuchtungseinheiten dann einschalten, wenn der Motor des Fahrzeugs abgeschaltet wird oder eine Seitentür des Fahrzeugs geöffnet wird. Auch im Hinblick auf ein Abschalten der Beleuchtungseinheiten nach dem Aussteigen aus dem Fahrzeug kann die Ansteuerung der Beleuchtungseinheiten mit der Innenraumbeleuchtung gekoppelt sein oder kann auf andere Weise mit der Fahrzeugelektronik so verbunden sein, dass die Beleuchtungseinheiten abgeschaltet werden, wenn die Seitentür des Fahrzeugs geschlossen wird oder das Fahrzeug verriegelt wird oder wenn seit einem dieser Ereignisse eine vorbestimmte Zeitdauer verstrichen ist.

Im Rangiermodus des Betriebs des erfindungsgemäßen Seitenschwellers 18, 18' ist die Ansteuerung der Beleuchtungseinheiten 40, 40' des Seitenschwellers an eine Erfassungeinrichtung gekoppelt, welche einen Zustand des Fahrzeugs erfasst, in dem das Fahrzeug rangiert. Insbesondere wird das Einlegen eines Rückwärtsgangs des Fahrzeugs 10 erfasst. Auf ein Signal der Erfassungseinrichtung hin werden die Beleuchtungseinheiten zur Beleuchtung eines seitlichen Fahrbahnbereichs eingeschaltet, um die Sichtbarkeit eines Hindernisses oder einer Fahrbahnmarkierung in diesem Bereich zu verbessern und somit das Rangieren für den Fahrer zu erleichtern.

Allgemein ist die Beleuchtung des Seitentür-Vorfeldbereichs gemäß der Erfindung besonders bei schlechten Lichtverhältnissen vorteilhaft. Zur Einsparung von Energie kann daran gedacht werden, die Seitentür-Vorfeldbereich-Beleuchtung bei ausreichend guten Lichtverhältnissen generell abzuschalten, wobei für diese Maßnahme ein Lichtsensor zweckmäßig ist. Zur Erzielung eines weiteren ästhetischen Effekts kann ferner vorgesehen sein, das Einschalten bzw. Ausschalten der Beleuchtungseinheiten über eine Dimmvorrichtung anzusteuern.

## Patentansprüche

1. Seitenschwellerteil (18; 18') für die Montage in einem Seitenschwellerbereich (16) eines Fahrzeugs (10), umfassend mindestens einen Befestigungsabschnitt zur Befestigung des Seitenschwellerteils (18; 18') an einer vorbestimmten Position in dem Seitenschwellerbereich (18) des Fahrzeugs (10),
**dadurch gekennzeichnet,**
**dass** das Seitenschwellerteil (18; 18') mindestens eine Beleuchtungseinheit (40; 40') aufweist, welche zur Aufnahme mindestens eines Leuchtmittels eingerichtet ist, um Licht in eine Lichtabstrahlrichtung abzustrahlen, wobei die Lichtabstrahlrichtung der mindestens einen Beleuchtungseinheit (40; 40') in einem an einem Fahrzeug (10) befestigten Zustand des Seitenschwellerteils (18; 18') zur Fahrbahnebene des Fahrzeugs (10) hin oder schräg zur Fahrbahnebene des Fahrzeugs (10) hin gerichtet ist.

2. Seitenschwellerteil (18; 18') nach Anspruch 1, **dadurch gekennzeichnet,**
**dass** die mindestens eine Beleuchtungseinheit (40; 40') so angeordnet und eingerichtet ist, dass in einem an einem Fahrzeug (10) befestigten Zustand des Seitenschwellerteils (18; 18') ein länglicher Seitentür-Vorfeldbereich (20) der Fahrbahnebene, nämlich ein Bereich der Fahrbahnebene, welcher sich außerhalb einer Projektionsfläche (24) des Fahrzeug (10) in die Fahrbahnebene befindet, durch die Beleuchtungseinheit (40; 40') beleuchtbar ist.

3. Seitenschwellerteil (18; 18') nach Anspruch 2, **dadurch gekennzeichnet, dass** der beleuchtbare Seitentür-Vorfeldbereich (22) im Bereich von Seitentüren (12, 14) des Fahrzeugs (10) an die Projektionsfläche des Fahrzeug (10) in die Fahrbahnebene im Wesentlichen angrenzt.

4. Seitenschwellerteil (18; 18') nach Anspruch 2 oder Anspruch 3,
**dadurch gekennzeichnet,**
**dass** die mindestens eine Beleuchtungseinheit (40; 40') für eine in Bezug auf die Fahrzeuglängsrichtung im Wesentlichen gleichmäßige Ausleuchtung des Seitentür-Vorfeldbereichs (22) eingerichtet ist.

5. Seitenschwellerteil (18; 18') nach einem der vorhergehenden Ansprüche, **dadurch gekennzeichnet,**
**dass** die mindestens eine Beleuchtungseinheit (40; 40') zur Aufnahme mindestens einer LED oder LED-Anordnung eingerichtet ist oder durch mindestens eine LED oder LED-Anordnung gebildet ist.

6. Seitenschwellerteil (18; 18') nach einem der vorhergehenden Ansprüche, **dadurch gekennzeichnet,**
**dass** es Anschlussmittel zum Anschluss der mindestens einen Beleuchtungseinheit an ein Fahrzeugbordnetz aufweist.

7. Seitenschwellerteil nach einem der vorhergehenden Ansprüche,
**dadurch gekennzeichnet,**
**dass** die mindestens eine Beleuchtungseinheit eine Reflektoranordnung aufweist, um aus dem Leuchtmittel austretendes Licht in die Lichtabstrahlrichtung zur reflektieren.

8. Seitenschwellerteil (18; 18') nach einem der vorhergehenden Ansprüche, **dadurch gekennzeichnet,**
**dass** es eine Verschmutzungsschutzanordnung (43) umfasst, welche mindestens einen neben der Beleuchtungseinheit (40; 40') angeordneten und im Wesentlichen parallel zur Lichtabstrahlrichtung ausgerichteten Wandabschnitt (44) aufweist.

9. Seitenschwellerteil (18; 18') nach einem der vorhergehenden Ansprüche, **dadurch gekennzeichnet,**
**dass** das Seitenschwellerteil (18; 18') eine Mehrzahl von Beleuchtungseinheiten (40; 40') aufweist, welche über die im Wesentlichen gesamte Länge des Seitenschwellerteils (18; 18') verteilt angeordnet sind, oder
**dass** das Seitenschwellerteil eine Anzahl von länglichen Beleuchtungseinheiten aufweist, welche sich entlang des Seitenschwellerteils im Wesentlichen über dessen gesamte Länge erstrecken.

10. Seitenschwellerteil nach Anspruch 9, **dadurch gekennzeichnet,**
**dass** die Mehrzahl von Beleuchtungseinheiten ein gemeinsames Anschlussmittel zum Anschluss an ein Fahrzeugbordnetz aufweisen.

11. Seitenschwellerteil (18; 18') nach einem der vorhergehenden Ansprüche, **dadurch gekennzeichnet,**
**dass** es als Fahrzeugseitenschweller (18; 18') ausgebildet ist.

12. Seitenschwellerteil (18; 18') nach Anspruch 11, **dadurch gekennzeichnet,**
**dass** die Beleuchtungseinheit (40; 40') an einem Flächenabschnitt (28, 28') des Seitenschwellerteils (18; 18') vorgesehen ist, welcher in einem an einem Fahrzeug (10) befestigten Zustand des Seitenschwellerteils (18; 18') im Wesentlichen zur Fahrbahnebene hin weist.

13. Seitenschwellerteil (18; 18') nach Anspruch 12, **dadurch gekennzeichnet,**
**dass** es im Wesentlichen eine L-Profilform oder U-Profilform aufweist, wobei die mindestens eine Beleuchtungseinheit (40; 40') einem Beugungsbereich (36) der L-Form bzw. U-Form benachbart angeordnet ist.

14. Seitenschwellerteil (18) nach einem der Ansprüche 11 bis 13,
**dadurch gekennzeichnet,**
**dass** die mindestens eine Beleuchtungseinheit (40) an einer Innenseite des Seitenschwellerteils (18), welche in einem an einem Fahrzeug (10) befestigten Zustand dem Fahrzeug (10) zugewandt ist, angeordnet ist und
**dass** das Seitenschwellerteil (18) mindestens eine Durchgangsöffnung (42) in Zuordnung zu der Beleuchtungseinheit (40) aufweist, welche den Durchtritt von Licht von der Beleuchtungseinheit (40) erlaubt.

15. Seitenschwellerteil nach einem der Ansprüche 11 bis 14, **dadurch gekennzeichnet,**
**dass** die Mehrzahl von Beleuchtungseinheiten über eine Verbindungsleiste miteinander verbunden sind, welche, vorzugsweise mittels einer Clipverbindung, an dem Seitenschweller befestigbar ist.

16. Seitenschwrellerteil nach Anspruch 15, **dadurch gekennzeichnet,**
**dass** die Verbindungsleiste, vorzugsweise einschließlich Clipverbindungsmittel und Teile von Anschlussmitteln, aus einem Kunststoffextrudat oder einem Kunststoffgussteil gebildet ist/sind.

17. Fahrzeug (10), **dadurch gekennzeichnet,**
**dass** es mindestens ein Seitenschwellerteil (18; 18') nach einem der vorhergehenden Ansprüche umfasst.

18. Fahrzeug (10) nach Anspruch 17, **dadurch gekennzeichnet,**
**dass** es je ein Seitenschwellerteil (18; 18') nach einem der Ansprüche 1 bis 16 in jedem von zwei Seitenschwellerbereichen (16) umfasst.

19. Fahrzeug (10) nach Anspruch 17 oder 18, **dadurch gekennzeichnet,**
**dass** die mindestens eine Beleuchtungseinheit (40; 40') über eine Fahrzeugelektronik ansteuerbar ist.

20. Fahrzeug (10) nach Anspruch 19, **dadurch gekennzeichnet,**
**dass** die Ansteuerung der mindestens einen Beleuchtungseinheit (40; 40') mit der Ansteuerung einer Innenraumbeleuchtung des Fahrzeugs gekoppelt, vorzugsweise mit dieser synchronisiert ist.

21. Fahrzeug (10) nach Anspruch 19 oder Anspruch 20, **dadurch gekennzeichnet,**
**dass** das Fahrzeug (10) eine Rangiermodus-Erfassungseinrichtung aufweist, welche einen Rangiermodus des Fahrzeug (10) erfasst, und dass ein Teil oder alle der mindestens einen Beleuchtungseinheit (40; 40') auf ein Signal der Rangiermodus-Erfassungseinrichtung hin ansteuerbar ist/sind.
